# EUROPEAN PATENT APPLICATION

(11) **EP 3 682 744 A1**
(43) Date of publication of application: **22.07.2020**
(21) Application number: 18854130.4
(22) Date of filing: 11.09.2018
(51) Int. Cl.: A23L 2/00, A23L 2/56

(54) **COLORLESS TRANSPARENT BEVERAGE CONTAINING LINALOOL**

(30) Priority: 11.09.2017 JP 2017174411
(71) Applicant: Suntory Holdings Limited, Osaka-shi, Osaka 530-8203 (JP)
(72) Inventor: HOMBO, Mizuho, Kawasaki-shi Kanagawa 211-0067 (JP); YASUI, Yohei, Kawasaki-shi Kanagawa 211-0067 (JP); MITO, Mika, Kawasaki-shi Kanagawa 211-0067 (JP); IBUSUKI, Daigo, Kawasaki-shi Kanagawa 211-0067 (JP); TOMOKIYO, Takaya, Kawasaki-shi Kanagawa 211-0067 (JP)
(74) Representative: Vossius & Partner Patentanwälte Rechtsanwälte mbB
(86) International application number: PCT/JP2018/033545
(87) International publication number: WO 2019/050041

(57) **Abstract**

An object of the present invention is to reduce the sensation of roughness felt on the tongue upon drinking of a linalool-containing colorless transparent beverage with a pH of 4.0 to 7.0.

At least one selected from the group consisting of geraniol, methyl salicylate, β-damascenone, benzaldehyde, decanoic acid, lauric acid, butyric acid, octanoic acid, and palmitic acid is added to the beverage.

## Description

### TECHNICAL FIELD

The present invention relates to linalool-containing colorless transparent beverages, and a method for producing the same.

### BACKGROUND ART

In recent years, flavored water has gained popularity against the backdrop of the rise in consumers' health consciousness and natural preference. Flavored water is a beverage with moderate sweetness produced by adding ingredients such as flavorant, essence, and/or fruit juice to water such as mineral water (including natural mineral water), and is a beverage with a water-like colorless transparent appearance, also called "near-water". Flavored water is generally characterized by having a clean taste and being as easy to drink as or easier to drink than water, on account of its pH value controlled to less than 4. In contrast, there has been almost no flavored water with a pH of 4 or more which has been commercially available in the market.

Linalool is a component found in essential oils of various plants. PTL 1 discloses a fruit-flavored beverage comprising linalool. PTL 2 discloses a beer-flavored effervescent beverage comprising linalool.

### CITATION LIST

### PATENT LITERATURES

PTL 1: International Patent Publication No. WO 2015/156282
PTL 2: Japanese Unexamined Patent Application Publication No. JP 2013-42675

### SUMMARY OF INVENTION

### TECHNICAL PROBLEM

Colorless transparent beverages like flavored water, due to their nature, have various restrictions on the types and amounts of ingredients added. In particular, the amount of an essence, fruit juice, etc. added is significantly restricted for the purpose of ensuring the maintenance of the colorless transparent nature of such beverages. Therefore, there are cases where a small amount of linalool may be added to a colorless transparent beverage like flavored water in order to ensure that the depth and breadth of taste of the beverage can be enhanced and also that the top note of the beverage can be enhanced.

However, it was newly found that there occurs a problem in that when linalool is added to a colorless transparent beverage with a pH of 4.0 or more, the sensation of roughness on the tongue is felt upon drinking of the beverage. The reason for this may be because as the pH becomes closer to neutral, the taste becomes less sour so that the lingering taste on the tongue, which is peculiar to linalool, becomes more prominent, and in addition, due to the sweetness of a sweetness component, the sensation of roughness sticking to the tongue is felt.

Therefore, an object of the present invention is to reduce the sensation of roughness felt on the tongue upon drinking of a linalool-containing colorless transparent beverage with a pH of 4.0 to 7.0.

### SOLUTION TO PROBLEM

The present inventors have made intensive studies to achieve the aforementioned object, and as a result, found that it is beneficial to add at least one aroma component selected from the group consisting of geraniol, methyl salicylate, β-damascenone, benzaldehyde, decanoic acid, lauric acid, butyric acid, octanoic acid, and palmitic acid, to a linalool-containing colorless transparent beverage with a pH of 4.0 to 7.0. Thus, the inventors completed the present invention.

More specifically, the present invention is directed, but not limited, to the following.
(1) A beverage comprising 50 to 14000 ppb of linalool, and at least one selected from the group consisting of geraniol, methyl salicylate, β-damascenone, benzaldehyde, decanoic acid, lauric acid, butyric acid, octanoic acid, and palmitic acid, wherein the beverage satisfies the following requirements (I) to (V):
   (I) an absorbance at a wavelength of 660 nm of 0.06 or less;
   (II) a ΔE (color difference) value of 3.5 or less relative to pure water;
   (III) a degree of sweetness of 3 to 10;
   (IV) a pH of 4.0 to 7.0; and
   (V) at least any one of (a) to (i) as defined below should be satisfied:
      (a) a geraniol content of 5 to 2000 ppb;
      (b) a methyl salicylate content of 1 to 200 ppb;
      (c) a β-damascenone content of 1 to 100 ppb;
      (d) a benzaldehyde content of 5 to 300 ppb;
      (e) a decanoic acid content of 5 to 5000 ppb;
      (f) a lauric acid content of 5 to 5000 ppb;
      (g) a butyric acid content of 5 to 5000 ppb;
      (h) an octanoic acid content of 5 to 5000 ppb;
      (i) a palmitic acid content of 5 to 5000 ppb.
(2) The beverage as set forth in (1), wherein the beverage satisfies at least one of the following requirements:
   (a) should be satisfied, and also a weight ratio of geraniol content to linalool content (geraniol content/linalool content) should be 0.0014 or more;
   (b) should be satisfied, and also a weight ratio of methyl salicylate content to linalool content (methyl salicylate content/linalool content) should be 0.00007 or more;
   (c) should be satisfied, and also a weight ratio of β-damascenone content to linalool content (β-damascenone content/linalool content) should be 0.00028 or more;
   (d) should be satisfied, and also a weight ratio of benzaldehyde content to linalool content (benzaldehyde content/linalool content) should be 0.0003 or more;
   (e) should be satisfied, and also a weight ratio of decanoic acid content to linalool content (decanoic acid content/linalool content) should be 0.0003 or more;
   (f) should be satisfied, and also a weight ratio of lauric acid content to linalool content (lauric acid content/linalool content) should be 0.0003 or more;
   (g) should be satisfied, and also a weight ratio of butyric acid content to linalool content (butyric acid content/linalool content) should be 0.0003 or more;
   (h) should be satisfied, and also a weight ratio of octanoic acid content to linalool content (octanoic acid content/linalool content) should be 0.0003 or more;
   (i) should be satisfied, and also a weight ratio of palmitic acid content to linalool content (palmitic acid content/linalool content) should be 0.0003 or more.
(3) A method for producing a beverage comprising 50 to 14000 ppb of linalool, and satisfying the following requirements (I) to (IV):
   (I) an absorbance at a wavelength of 660 nm of 0.06 or less;
   (II) a ΔE (color difference) value of 3.5 or less relative to pure water;
   (III) a degree of sweetness of 3 to 10; and
   (IV) a pH of 4.0 to 7.0;
      the method comprising the step of adjusting the content of at least one selected from the group consisting of geraniol, methyl salicylate, β-damascenone, benzaldehyde, decanoic acid, lauric acid, butyric acid, octanoic acid, and palmitic acid, so as to satisfy at least any one of (a) to (i) as defined below:
      (a) a geraniol content in the beverage should be in the range of 5 to 2000 ppb;
      (b) a methyl salicylate content in the beverage should be in the range of 1 to 200 ppb;
      (c) a β-damascenone content in the beverage should be in the range of 1 to 100 ppb;
      (d) a benzaldehyde content in the beverage should be in the range of 5 to 300 ppb;
      (e) a decanoic acid content in the beverage should be in the range of 5 to 5000 ppb;
      (f) a lauric acid content in the beverage should be in the range of 5 to 5000 ppb;
      (g) a butyric acid content in the beverage should be in the range of 5 to 5000 ppb;
      (h) an octanoic acid content in the beverage should be in the range of 5 to 5000 ppb;
      (i) a palmitic acid content in the beverage should be in the range of 5 to 5000 ppb.

### ADVANTAGEOUS EFFECTS OF INVENTION

The present invention can provide a linalool-containing colorless transparent beverage with a pH of 4.0 to 7.0, which is characterized in that the sensation of roughness on the tongue felt upon drinking is reduced. This invention can also provide a colorless transparent beverage with a pH of 4.0 to 7.0, which is characterized in that the sensation of roughness on the tongue felt upon drinking is reduced and that the depth and breadth of taste and the top note of the beverage, which are enhanced by linalool, are felt. Additionally, the "sensation of roughness" as referred to herein means a sense of roughness felt with the whole of the tongue, and in particular, means a physical feeling of stickiness to the tongue.

### DESCRIPTION OF EMBODIMENTS

The following provides descriptions of the beverage and related method according to the present invention.

Unless otherwise specified, the "ppb" as used herein refers to ppb by weight/volume (w/v). All numerical ranges defined herein by lower and upper limits, *i.e.* defined as "lower limit to upper limit", include their lower and upper limits. For example, the range defined as "1 to 2" includes 1 and 2.

### (Linalool)

The beverage of the present invention comprises linalool. The origin of linalool contained in the beverage of the present invention is not limited. Linalool can be derived from natural ingredients such as plants or can be a synthetic product.

The beverage of the present invention comprises linalool at a concentration of 50 to 14000 ppb, preferably 150 to 12000 ppb, more preferably 300 to 10000 ppb. If the linalool content in the beverage is significantly lower than 50 ppb, the depth and breadth of taste and the top note of the beverage, which are enhanced by linalool, are less apt to be felt. In contrast, if the linalool content exceeds 14000 ppb, the sensation of roughness felt on the tongue tends to become too intense.

### (Components reducing a sensation of roughness)

The beverage of the present invention comprises at least one selected from the group consisting of geraniol, methyl salicylate, β-damascenone, benzaldehyde, decanoic acid, lauric acid, butyric acid, octanoic acid, and palmitic acid. Any two or more, three or more, four or more, five or more, six or more, seven or more, eight or more, or all nine of the aforementioned components can be contained in the beverage. The origins of these components used in this invention are not limited. These components can be derived from natural ingredients such as plants or can be synthetic products.

The geraniol content in the beverage of the present invention is in the range of 5 to 2000 ppb, preferably 5 to 1800 ppb, more preferably 10 to 1600 ppb, still more preferably 15 to 1500 ppb, yet more preferably 500 to 1500 ppb. When the geraniol content in the beverage is controlled to lie within the aforementioned range, the sensation of roughness felt on the tongue upon drinking, which is caused by linalool, can be effectively reduced.

The weight ratio of geraniol content to linalool content in the beverage of the present invention (geraniol content/linalool content) is not particularly limited, but is for example 0.001 or more, preferably 0.005 or more, more preferably 0.01 or more. Also, this weight ratio is, for example but not particularly limited to, 50 or less, preferably 40 or less, more preferably 30 or less. More specifically, this weight ratio is, for example but not particularly limited to, in the range of 0.001 to 50, preferably 0.005 to 40, more preferably 0.01 to 30.

The methyl salicylate content in the beverage of the present invention is in the range of 1 to 200 ppb, preferably 10 to 200 ppb, more preferably 20 to 200 ppb, more preferably 50 to 150 ppb. When the methyl salicylate content in the beverage is controlled to lie within the aforementioned range, the sensation of roughness felt on the tongue upon drinking, which is caused by linalool, can be effectively reduced.

The weight ratio of methyl salicylate content to linalool content in the beverage of the present invention (methyl salicylate content/linalool content) is not particularly limited, but is for example 0.00007 or more, preferably 0.0005 or more, more preferably 0.001 or more. Also, this weight ratio is, for example but not particularly limited to, 5 or less, preferably 3 or less, more preferably 1 or less. More specifically, this weight ratio is, for example but not particularly limited to, in the range of 0.00007 to 5, preferably 0.00007 to 3, more preferably 0.0005 to 3, still more preferably 0.001 to 1.

The β-damascenone content in the beverage of the present invention is in the range of 1 to 100 ppb, preferably 5 to 100 ppb, more preferably 5 to 80 ppb. When the β-damascenone content in the beverage is controlled to lie within the aforementioned range, the sensation of roughness felt on the tongue upon drinking, which is caused by linalool, can be effectively reduced.

The weight ratio of β-damascenone content to linalool content in the beverage of the present invention (β-damascenone content/linalool content) is not particularly limited, but is for example 0.0002 or more, preferably 0.0005 or more, more preferably 0.0008 or more. Also, this weight ratio is, for example but not particularly limited to, 3 or less, preferably 2 or less, more preferably 1 or less. More specifically, this weight ratio is, for example but not particularly limited to, in the range of 0.0002 to 3, preferably 0.0005 to 2, more preferably 0.0008 to 1.

The benzaldehyde content in the beverage of the present invention is in the range of 5 to 300 ppb, preferably 10 to 250 ppb, more preferably 15 to 200 ppb. When the benzaldehyde content in the beverage is controlled to lie within the aforementioned range, the sensation of roughness felt on the tongue upon drinking, which is caused by linalool, can be effectively reduced.

The weight ratio of benzaldehyde content to linalool content in the beverage of the present invention (benzaldehyde content/linalool content) is not particularly limited, but is for example 0.0003 or more, preferably 0.0005 or more, more preferably 0.001 or more. Also, this weight ratio is, for example but not particularly limited to, 8 or less, preferably 6 or less, more preferably 4 or less. More specifically, this weight ratio is, for example but not particularly limited to, in the range of 0.0003 to 8, preferably 0.0005 to 6, more preferably 0.001 to 4.

The decanoic acid content in the beverage of the present invention is in the range of 5 to 5000 ppb, preferably 10 to 4500 ppb, more preferably 15 to 4000 ppb, still more preferably 20 to 3500 ppb. When the decanoic acid content in the beverage is controlled to lie within the aforementioned range, the sensation of roughness felt on the tongue upon drinking, which is caused by linalool, can be effectively reduced.

The weight ratio of decanoic acid content to linalool content in the beverage of the present invention (decanoic acid content/linalool content) is not particularly limited, but is for example 0.0003 or more, preferably 0.0005 or more, more preferably 0.001 or more. Also, this weight ratio is, for example but not particularly limited to, 100 or less, preferably 80 or less, more preferably 60 or less. The upper limit of this weight ratio may be 10, 5, or 1. More specifically, this weight ratio is, for example but not particularly limited to, in the range of 0.0003 to 100, preferably 0.0005 to 80, more preferably 0.001 to 60. Further, this weight ratio may be in the range of 0.0003 to 10, 0.0003 to 5, or 0.0003 to 1.

The lauric acid content in the beverage of the present invention is in the range of 5 to 5000 ppb, preferably 10 to 4500 ppb, more preferably 15 to 4000 ppb, still more preferably 20 to 3500 ppb. When the lauric acid content in the beverage is controlled to lie within the aforementioned range, the sensation of roughness felt on the tongue upon drinking, which is caused by linalool, can be effectively reduced.

The weight ratio of lauric acid content to linalool content in the beverage of the present invention (lauric acid content/linalool content) is not particularly limited, but is for example 0.0003 or more, preferably 0.0005 or more, more preferably 0.001 or more. Also, this weight ratio is, for example but not particularly limited to, 100 or less, preferably 80 or less, more preferably 60 or less. The upper limit of this weight ratio may be 10, 5, or 1. More specifically, this weight ratio is, for example but not particularly limited to, in the range of 0.0003 to 100, preferably 0.0005 to 80, more preferably 0.001 to 60. Further, this weight ratio may be in the range of 0.0003 to 10, 0.0003 to 5, or 0.0003 to 1.

The butyric acid content in the beverage of the present invention is in the range of 5 to 5000 ppb, preferably 7.5 to 4500 ppb, more preferably 10 to 4000 ppb, still more preferably 12.5 to 3500 ppb. When the butyric acid content in the beverage is controlled to lie within the aforementioned range, the sensation of roughness felt on the tongue upon drinking, which is caused by linalool, can be effectively reduced.

The weight ratio of butyric acid content to linalool content in the beverage of the present invention (butyric acid content/linalool content) is not particularly limited, but is for example 0.0003 or more, preferably 0.0005 or more, more preferably 0.001 or more. Also, this weight ratio is, for example but not particularly limited to, 100 or less, preferably 80 or less, more preferably 60 or less. The upper limit of this weight ratio may be 10, 5, or 1. More specifically, this weight ratio is, for example but not particularly limited to, in the range of 0.0003 to 100, preferably 0.0005 to 80, more preferably 0.001 to 60. Further, this weight ratio may be in the range of 0.0003 to 10, 0.0003 to 5, or 0.0003 to 1.

The octanoic acid content in the beverage of the present invention is in the range of 5 to 5000 ppb, preferably 7.5 to 4500 ppb, more preferably 10 to 4000 ppb, still more preferably 12.5 to 3500 ppb. When the octanoic acid content in the beverage is controlled to lie within the aforementioned range, the sensation of roughness felt on the tongue upon drinking, which is caused by linalool, can be effectively reduced.

The weight ratio of octanoic acid content to linalool content in the beverage of the present invention (octanoic acid content/linalool content) is not particularly limited, but is for example 0.0003 or more, preferably 0.0005 or more, more preferably 0.001 or more. Also, this weight ratio is, for example but not particularly limited to, 100 or less, preferably 80 or less, more preferably 60 or less. The upper limit of this weight ratio may be 10, 5, or 1. More specifically, this weight ratio is, for example but not particularly limited to, in the range of 0.0003 to 100, preferably 0.0005 to 80, more preferably 0.001 to 60. Further, this weight ratio may be in the range of 0.0003 to 10, 0.0003 to 5, or 0.0003 to 1.

The palmitic acid content in the beverage of the present invention is in the range of 5 to 5000 ppb, preferably 7.5 to 4500 ppb, more preferably 10 to 4500 ppb, still more preferably 100 to 4500 ppb. When the palmitic acid content in the beverage is controlled to lie within the aforementioned range, the sensation of roughness felt on the tongue upon drinking, which is caused by linalool, can be effectively reduced.

The weight ratio of palmitic acid content to linalool content in the beverage of the present invention (palmitic acid content/linalool content) is not particularly limited, but is for example 0.0003 or more, preferably 0.0005 or more, more preferably 0.001 or more. Also, this weight ratio is, for example but not particularly limited to, 100 or less, preferably 80 or less, more preferably 60 or less. The upper limit of this weight ratio may be 10, 5, or 1. More specifically, this weight ratio is, for example but not particularly limited to, in the range of 0.0003 to 100, preferably 0.0005 to 80, more preferably 0.001 to 60. Further, this weight ratio may be in the range of 0.0003 to 10, 0.0003 to 5, or 0.0003 to 1.

### (Procedure for component quantification)

In the context of the present invention, the contents or concentrations of linalool, and geraniol, methyl salicylate, β-damascenone and benzaldehyde in a beverage (sample solution) are measured by the procedure described below using a GC/MS analyzer, unless otherwise specified.

Five grams of a sample solution is measured out in a vial (volume: 20 mL), 1.5 g of NaCl is added and dissolved, and the solution is stirred at 40°C for 20 min. Then, 1 mL of the gas phase is collected and measured by GC/MS analysis. The retention times of different components are confirmed by the analysis of standard reference materials. Quantitative values are calculated by the standard addition method. The conditions for GC/MS analysis are as follows.

### System:

| | |
|---|---|
| GC: | GC7890B, produced by Agilent Technologies |
| MS: | 5977A, produced by Agilent Technologies |
| Column: | DB WAX, 60 m × 0.25 mm i.d., df = 0.25 µm |

### Quantitative ions:

| | |
|---|---|
| Linalool: | m/z = 93 |
| Geraniol: | m/z = 69 |
| Methyl salicylate: | m/z = 120 |
| β-Damascenone: | m/z = 121 |
| Benzaldehyde: | m/z = 106 |
| Temperature conditions: | 40°C (5 min.) => 5°C/min. => 240°C |
| Carrier gas flow rate: | He 1.2 mL/min. |
| Inlet temperature: | 250°C |
| Interface temperature: | 250°C |
| Ion source temperature: | 230°C |

In the context of the present invention, the contents or concentrations of decanoic acid, lauric acid, butyric acid, octanoic acid and palmitic acid in a beverage (sample solution) are measured by a known procedure using GC or LC/MS analysis.

### (Colorless transparent beverage)

The beverage of the present invention is colorless. The colorless appearance of the beverage can be defined by a ΔE (color difference) value of transmitted light as measured relative to pure water using a colorimetric color difference meter (e.g., ZE 2000 (produced by Nippon Denshoku Industries Co., Ltd.)). To be specific, the ΔE value of the beverage of this invention as measured relative to pure water is 3.5 or less. The ΔE value is preferably 2.3 or less.

Also, the beverage of the present invention is transparent. By stating that "the beverage is transparent", it is meant that the beverage is not white turbid like so-called sports drinks nor cloudy like cloudy fruit juices, and is visually transparent like water. The transparency of the beverage can be converted to numerical data using a known technique for measuring liquid turbidity. For example, the transparency of the beverage can be defined by absorbance at a wavelength of 660 nm as measured using an ultraviolet visible spectrophotometer (e.g., UV-1600 (produced by Shimadzu Corporation)). To be specific, the beverage of this invention has an absorbance at a wavelength of 660 nm of 0.06 or less.

### (Degree of sweetness)

The degree of sweetness of the beverage of the present invention is in the range of 3 to 10. There occurs a problem in that when linalool is added to a colorless transparent beverage with a pH of 4.0 to 7.0, the sensation of roughness on the tongue is felt upon drinking of the beverage. In particular, it is considered that when the degree of sweetness of the beverage falls within the aforementioned range, the sensation of roughness on the tongue is prominently felt. The degree of sweetness of the beverage is preferably in the range of 3 to 9, more preferably 3 to 8, still more preferably 3 to 7. If the degree of sweetness of the beverage is less than 3, the colorless transparent beverage tends to become excessively low in sweetness, so that the taste of the beverage itself may be deteriorated. In contrast, if the degree of sweetness of the beverage exceeds 10, the colorless transparent beverage tends to become excessively strong in sweetness, so that the sensation of roughness felt on the tongue may become too intense.

The "degree of sweetness", as referred to herein, is an index that indicates the sweetness of a beverage as determined based on the sweetness of 100 g of a beverage containing 1 g of sucrose, which is taken as "1". The degree of sweetness of the beverage is determined by converting the content of each sweetness component into a sucrose equivalent based on the relative ratio of the sweetness of each sweetness component to that of sucrose, which is taken as 1, and then by totaling the sucrose sweetness equivalents of all sweetness components (including sweetness components derived from fruit juice, essence, etc.) contained in the beverage. The relative ratios of the sweetness of different representative sweetness components to that of sucrose, which is taken as 1, are listed in Table 1. With regard to other sweetness components not listed in Table 1, the degrees of sweetness presented by manufacturers who produce or sell those other sweetness components can be used, or the degrees of sweetness can be determined by sensory testing.

**[Table 1]**

| Sweetness component | Degree of sweetness |
|---|---|
| | |
| Sucrose | 1 |
| Glucose | 0.6 |
| Fructose | 1.2 |
| HFCS (with 55% fructose) | 1 |
| Lactose | 0.3 |
| Trehalose | 0.4 |
| D-psicose | 0.7 |
| Maltose | 0.4 |
| Sorbitol | 0.6 |
| Mannitol | 0.6 |
| Maltitol | 0.8 |
| Xylitol | 0.6 |
| Reduced palatinose | 0.45 |
| Erythritol | 0.8 |
| Lactitol | 0.8 |
| Saccharified reduced starch | 0.1 |
| Stevia | 100 |
| Glycyrrhizin | 50 |
| Thaumatin | 2000 |
| Saccharin | 200 |
| Aspartame | 100 |
| Acesulfame potassium | 200 |
| Sucralose | 600 |
| Alitame | 2000 |
| Cyclamate | 30 |
| Dulcin | 200 |
| Neotame | 1000 |
| Neohesperidin | 1000 |
| Monellin | 25000 |
| Lysozyme | 20 |

In the present invention, the degree of sweetness of the beverage can be adjusted using a sweetness component(s). For example, the sweetness components listed in Table 1 can be used, but other sweetness components may also be used. Preferred sweetness components are fructose, sugar, high-fructose corn syrup (with 55% fructose), glucose, sucrose, lactose, acesulfame potassium, sucralose, aspartame, stevia, erythritol, and maltitol, with sucrose being a particularly preferred sweetness component. In this invention, such a sweetness component may be directly added as a sweetener to the beverage, or a fruit juice, essence or the like containing such a sweetness component may be added to the beverage.

### (pH)

The pH of the beverage of the present invention is in the range of 4.0 to 7.0. When the pH of the linalool-containing colorless transparent beverage falls within the aforementioned range, the sensation of roughness on the tongue is felt upon drinking of the beverage. When the pH of the beverage is in such a range, the effect of this invention is particularly beneficial. The pH of the beverage of this invention may be in the range of 4.3 to 6.5, 4.5 to 6.0, or 4.8 to 5.5.

### (Acidulant)

The beverage of the present invention may contain an acidulant. The pH of the beverage of this invention can be adjusted by adding an acidulant. The type of an acidulant used in this invention is not particularly limited, and typical examples of the acidulant include citric acid, malic acid, lactic acid, phosphoric acid, tartaric acid, gluconic acid, and salts thereof. In particular, citric acid, malic acid, phosphoric acid, and salts thereof are preferred. The beverage of this invention may contain only a single type of acidulant or two or more types of acidulants. The term "acidulant" as used herein in relation to this invention encompasses not only food additives but also acids derived from fruit juice. To be specific, if the beverage contains a fruit juice which contains such an acid as listed above, said acid is regarded as an acidulant.

### (Mineral)

The beverage of the present invention preferably contains a mineral. The beverage of this invention is suitable, without particular limitation, for use as a rehydration beverage consumed in summer or while doing sports. For such a purpose, the beverage of this invention can be provided as a beverage for supplementing minerals lost during sweating, by adjusting the concentration of a mineral to be within an appropriate range. Examples of the mineral include, but are not limited to, sodium, potassium, magnesium, calcium, and iron. Such minerals can be added to the beverage of this invention in the form of salts that can be used in foods and beverages, or in the form of deep ocean water, seaweed essence, or the like which are rich in such minerals. In the beverage of this invention, one of such minerals can be used alone, or two or more thereof can be used in combination. The minerals used in the beverage of this invention are preferably sodium and magnesium. The concentration of sodium in the beverage is preferably in the range of 1 to 50 mg/100 mL, and the concentration of magnesium in the beverage is preferably in the range of 1 to 20 mg/100 mL. When a mineral is used in the form of a salt, the content of the mineral shall be calculated in terms of its free form. The concentration of a mineral in the beverage of this invention can be measured by a known procedure using an ICP optical emission spectrometer.

### (Tannin)

The tannin content of the beverage of the present invention is not particularly limited, but is preferably 150 ppm or less, since tannin, when present in large amounts, tends to cause coloration of a beverage. If the tannin content in the beverage exceeds 150 ppm, the beverage may be colored so that it may not be kept colorless and transparent. Since tannin has a peculiar astringent taste, it may impair the palatability of a beverage when it is present in the beverage in large amounts.

### (Caffeine)

The beverage of the present invention preferably contains caffeine. The preferred concentration of caffeine in the beverage is in the range of 100 to 200 ppm. With the aid of the stimulus generated by a moderate concentration of caffeine, the effect of this invention can be perceived more prominently. However, if the caffeine concentration exceeds 200 ppm, the palatability of the beverage may be impaired due to the bitterness of caffeine.

### (Other components)

In addition to the different components described hereinabove, various additives used in common beverages, such as flavorant, sugar, enrichment (e.g., vitamin), antioxidant, emulsifier, preservative, essence, dietary fiber, pH adjustor, and quality stabilizer, can be added to the beverage of the present invention, to the extent that such additives do not impair the effect of the present invention. In particular, since the beverage of this invention is characterized by being colorless and transparent, there is a significant limitation on the amount added of an essence, fruit juice, etc. Thus, in order to compensate for this limitation, it is preferred to add a flavorant. A preferred flavorant is a black tea flavor.

### (Beverage)

The type of the beverage of the present invention is not particularly limited as long as the beverage is a colorless transparent beverage contemplated by this invention, or namely a soft drink. The inventive beverage can be of any type, including nutritional beverage, functional beverage, flavored water (near water) beverage, tea beverage (e.g., black tea, oolong tea, green tea, blend tea), or carbonated beverage, with flavored water being preferred. The inventive beverage is preferably a tea-flavored beverage, more preferably a black tea-flavored beverage, particularly preferably a milky tea-flavored beverage. In contrast, alcoholic beverages with an alcohol content of 1% or more are not preferred, since the effect of this invention may be impeded by an alcohol contained in the beverage. Also, beer-flavored beverages with an alcohol-like taste are not preferred, since the effect of this invention may be impeded by aroma components uniquely present in beers.

The beverage of the present invention is preferably a packaged beverage, which is a beverage that is heat sterilized and packed in a package. The package used is not particularly limited, and exemplary packages include PET bottle, aluminum can, steel can, carton, cup for chilled drink, and glass bottle. *Inter alia,* it is preferred to use a colorless transparent package such as PET bottle, since one can see the characteristic colorless transparent appearance of the beverage of this invention while the beverage is packed in such a package. When heat sterilization is performed, the method of heat sterilization is not particularly limited. Heat sterilization can be performed using a common method such as UHT sterilization or retort sterilization. The temperature conditions for heat sterilization process are not particularly limited, and are, for example, 65 to 130°C, preferably 85 to 120°C, for 10 to 40 minutes. However, any other sterilization process may also be performed at an appropriate temperature for several seconds, such as 5 to 30 seconds, as long as such a process can achieve a comparable sterilizing value to that process under the aforementioned conditions.

### (Method)

In another aspect, the present invention is directed to a method for producing a beverage comprising 50 to 14000 ppb of linalool and satisfying the following requirements (I) to (IV):
(I) an absorbance at a wavelength of 660 nm of 0.06 or less;
(II) a ΔE (color difference) value of 3.5 or less relative to pure water;
(III) a degree of sweetness of 3 to 10; and
(IV) a pH of 4.0 to 7.0.

This method comprises the step of adjusting the content of at least one selected from the group consisting of geraniol, methyl salicylate, β-damascenone, benzaldehyde, decanoic acid, lauric acid, butyric acid, octanoic acid, and palmitic acid, so as to satisfy at least any one of (a) to (i) as defined below:
(a) a geraniol content in the beverage should be in the range of 5 to 2000 ppb;
(b) a methyl salicylate content in the beverage should be in the range of 1 to 200 ppb;
(c) a β-damascenone content in the beverage should be in the range of 1 to 100 ppb;
(d) a benzaldehyde content in the beverage should be in the range of 5 to 300 ppb;
(e) a decanoic acid content in the beverage should be in the range of 5 to 5000 ppb;
(f) a lauric acid content in the beverage should be in the range of 5 to 5000 ppb;
(g) a butyric acid content in the beverage should be in the range of 5 to 5000 ppb;
(h) an octanoic acid content in the beverage should be in the range of 5 to 5000 ppb;
(i) a palmitic acid content in the beverage should be in the range of 5 to 5000 ppb.

Further, since this method can reduce the sensation of roughness felt upon drinking of the beverage, which is caused by linalool, the present invention is also directed to a method for reducing the sensation of roughness on the tongue caused by linalool in the beverage.

The types, contents and weight ratios of the components contained in the beverage, the absorbance, color difference, pH and degree of sweetness of the beverage, and preferred ranges thereof, as well as the adjustment procedures thereof are as described above in relation to the beverage of this invention or are obvious from the descriptions given above. The timings of different steps are not limited. For example, the aforementioned step can be performed simultaneously with, or separately from, other steps such as absorbance adjustment step, color difference adjustment step, pH adjustment step, degree of sweetness adjustment step, and linalool content adjustment step, or all those steps can be performed in random order. Any procedure can be adopted as long as the beverage finally obtained satisfies the aforementioned requirements.

### EXAMPLES

Hereunder, the present invention will be described by way of working examples, but this invention is not limited to these examples.

### (Test Example 1)

Different beverages were prepared by mixing water with a sugar and linalool in different amounts as indicated in the table given below and adjusting the pH with phosphoric acid and trisodium citrate. The prepared beverages were measured for their absorbance at a wavelength of 660 nm using a spectrophotometer (UV-1600 (produced by Shimadzu Corporation)), and also measured for their ΔE of transmitted light relative to pure water using a colorimetric color difference meter (ZE 2000 (produced by Nippon Denshoku Industries Co., Ltd.)). All of the prepared beverages showed an absorbance of 0.06 or less and a ΔE value of transmitted light of 3.5 or less as measured relative to pure water.

The different beverages were subjected to sensory testing by 3 panelists on whether the sensation of roughness on the tongue was felt upon drinking. To be specific, the beverages were rated on a six-grade scale from 1 to 6, with "1" being "sensation of roughness on the tongue is strongly felt", and "6" being "no sensation of roughness on the tongue is felt". The specific evaluation criteria are described below.

| | |
|---|---|
| 6 points: | No sensation of roughness on the tongue is felt |

| | |
|---|---|
| 5 points: | Little sensation of roughness on the tongue is felt |
| 4 points: | Sensation of roughness on the tongue is slightly felt after careful observation |
| 3 points: | Sensation of roughness on the tongue is somewhat felt after careful observation |
| 2 points: | Sensation of roughness on the tongue is noticeably felt |
| 1 point: | Sensation of roughness on the tongue is strongly felt |

The averages of their ratings are shown in the table given below. Before the sensory testing, the panelists had confirmed the relationship between the different intensities of sensation of roughness on the tongue and their corresponding ratings using a sample serving as a standard for evaluation, so as to ensure that their ratings were standardized as much as possible. The aforementioned sensory testing procedure was adopted also in other test examples.

**[Table 2]**

| | 1 | 2 | 3 | 4 |
|---|---|---|---|---|
| Sugar (g/100mL) | 5.1 | 5.1 | 5.1 | 5.1 |
| 75% phosphoric acid (mg/100mL) | 0.17 | 0.17 | 4.8 | 4.8 |
| Trisodium citrate (mg/100mL) | 0.33 | 0.33 | - | - |
| Linalool (ppb) | 0 | 7000 | 0 | 7000 |
| Degree of sweetness | 5 | 5 | 5 | 5 |
| pH | 5.5 | 5.5 | 3.5 | 3.5 |
| Sensory rating | 4 | 1 | 5 | 6 |

As evident from the table given above, it was found that the problem with the sensation of roughness on the tongue became more prominent due to the presence of linalool in beverages with a pH of 5.5 than in beverages with a pH of 3.5.

### (Test Example 2)

Different beverages were prepared by mixing water with different ingredients in different amounts as indicated in the tables given below. The pH of the beverages was adjusted with phosphoric acid and trisodium citrate. However, no phosphoric acid nor trisodium citrate were used in Trial Product 21. The prepared beverages were measured for their absorbance at a wavelength of 660 nm and their ΔE of transmitted light relative to pure water by following the same procedures as in Test Example 1. All of the prepared beverages showed an absorbance of 0.06 or less and a ΔE value of transmitted light of 3.5 or less as measured relative to pure water.

The prepared beverages were subjected to sensory testing by following the same procedure as in Test Example 1. The averages of their ratings are shown in the tables given below.

**[Table 3A]**

| | 5 | 6 | 7 | 8 | 9 | 10 | 11 | 12 | 13 |
|---|---|---|---|---|---|---|---|---|---|
| Sugar (g/100mL) | 5.1 | 5.1 | 5.1 | 5.1 | 5.1 | 5.1 | 5.1 | 5.1 | 3.0 |
| Sucrarose (mg/100mL) | - | - | - | - | - | - | - | - | - |
| 75% phosphoric acid (mg/100mL) | 0.17 | 0.17 | 0.17 | 0.17 | 0.17 | 0.17 | 0.17 | 0.17 | 0.17 |
| Trisodium citrate (mg/100mL) | 0.33 | 0.33 | 0.33 | 0.33 | 0.33 | 0.33 | 0.33 | 0.33 | 0.33 |
| Linalool (ppb) | 50 | 50 | 7000 | 7000 | 7000 | 7000 | 7000 | 14000 | 7000 |
| Geraniol (ppb) | 0 | 5 | 10 | 500 | 1500 | 2000 | 2500 | 20 | 500 |
| Degree of sweetness | 5 | 5 | 5 | 5 | 5 | 5 | 5 | 5 | 3 |
| pH | 5.5 | 5.5 | 5.5 | 5.5 | 5.5 | 5.5 | 5.5 | 5.5 | 5.5 |
| Geraniol/linalool | 0 | 0.1 | 0.0014 | 0.071 | 0.21 | 0.29 | 0.36 | 0.0014 | 0.071 |
| Sensory rating | 2.0 | 3.0 | 3.3 | 5.7 | 6.0 | 3.3 | 2.0 | 3.0 | 5.7 |

**[Table 3B**

| | 14 | 15 | 16 | 17 | 18 | 19 | 20 | 21 |
|---|---|---|---|---|---|---|---|---|
| Sugar (g/100mL) | 10.4 | - | 5.1 | 5.1 | 5.1 | 5.1 | 10.4 | 5.1 |
| Sucrarose mg/100mL) | - | 8.33 | - | - | - | - | - | - |
| 75% phosphoric acid (mg/100mL) | 0.17 | 0.17 | 1.6 | 1.6 | 0.17 | 0.17 | 0.17 | 0 |
| Trisodium citrate (mg/100mL) | 0.33 | 0.33 | 0.33 | 0.33 | 13.1 | 13.1 | 0.33 | 0 |
| Linalool (ppb) | 7000 | 7000 | 7000 | 7000 | 7000 | 7000 | 7000 | 7000 |
| Geraniol (ppb) | 500 | 500 | 0 | 500 | 0 | 500 | 500 | 500 |
| Degree of sweetness | 10 | 5 | 5 | 5 | 5 | 5 | 10 | 5 |
| pH | 5.5 | 5.5 | 4.0 | 4.0 | 7.0 | 7.0 | 5.5 | 6.2 |
| Geraniol/linalool | 0.071 | 0.071 | 0 | 0.071 | 0 | 0.071 | 0.071 | 0.071 |
| Sensory rating | 5.7 | 5.7 | 1.0 | 5.7 | 1.0 | 5.7 | 5.7 | 5.7 |

As evident from the tables given above, in beverages with a pH ranging from 4.0 to 7.0 and a degree of sweetness ranging from 3 to 10, geraniol functioned to reduce the sensation of roughness on the tongue. Also, particularly superior effect was observed when the geraniol content and the weight ratio of geraniol/linalool fell within the particular ranges.

### (Test Example 3)

Different beverages were prepared by mixing water with different ingredients in different amounts as indicated in the tables given below. The pH of the beverages was adjusted with phosphoric acid and trisodium citrate. However, no phosphoric acid nor trisodium citrate were used in Trial Product 38. The prepared beverages were measured for their absorbance at a wavelength of 660 nm and their ΔE of transmitted light relative to pure water by following the same procedures as in Test Example 1. All of the prepared beverages showed an absorbance of 0.06 or less and a ΔE value of transmitted light of 3.5 or less as measured relative to pure water.

The prepared beverages were subjected to sensory testing by following the same procedure as in Test Example 1. The averages of their ratings are shown in the tables given below.

**[Table 4A]**

| | 22 | 23 | 24 | 25 | 26 | 27 | 28 | 29 | 30 |
|---|---|---|---|---|---|---|---|---|---|
| Sugar (g/100mL) | 5.1 | 5.1 | 5.1 | 5.1 | 5.1 | 5.1 | 5.1 | 5.1 | 3.0 |
| Sucrarose (mg/100mL) | - | - | - | - | - | - | - | - | - |
| 75% phosphoric acid (mg/100mL) | 0.17 | 0.17 | 0.17 | 0.17 | 0.17 | 0.17 | 0.17 | 0.17 | 0.17 |
| Trisodium citrate (mg/100mL) | 0.33 | 0.33 | 0.33 | 0.33 | 0.33 | 0.33 | 0.33 | 0.33 | 0.33 |
| Linalool (ppb) | 50 | 50 | 7000 | 7000 | 7000 | 7000 | 7000 | 14000 | 7000 |
| Methyl salicylate (ppb) | 0 | 1 | 1 | 50 | 150 | 200 | 300 | 1 | 50 |
| Degree of sweetness | 5 | 5 | 5 | 5 | 5 | 5 | 5 | 5 | 3 |
| pH | 5.5 | 5.5 | 5.5 | 5.5 | 5.5 | 5.5 | 5.5 | 5.5 | 5.5 |
| Methyl salicylate/linalool | 0 | 0.020 | 0.00014 | 0.0071 | 0.021 | 0.029 | 0.043 | 0.000071 | 0.0071 |
| Sensory rating | 2.0 | 3.7 | 3.3 | 6.0 | 6.0 | 3.7 | 2.0 | 3.0 | 5.5 |

**[Table 4B]**

| | 31 | 32 | 33 | 34 | 35 | 36 | 37 | 38 |
|---|---|---|---|---|---|---|---|---|
| Sugar (g/100mL) | 10.4 | - | 5.1 | 5.1 | 5.1 | 5.1 | 10.4 | 5.1 |
| Sucrarose (mg/100mL) | - | 8.33 | - | - | - | - | - | - |
| 75% phosphoric acid (mg/100mL) | 0.17 | 0.17 | 1.6 | 1.6 | 0.17 | 0.17 | 0.17 | 0 |
| Trisodium citrate (mg/100mL) | 0.33 | 0.33 | 0.33 | 0.33 | 13.1 | 13.1 | 0.33 | 0 |
| Linalool (ppb) | 7000 | 7000 | 7000 | 7000 | 7000 | 7000 | 7000 | 7000 |
| Methyl salicylate (ppb) | 50 | 50 | 0 | 50 | 0 | 50 | 50 | 50 |
| Degree of sweetness | 10 | 5 | 5 | 5 | 5 | 5 | 10 | 5 |
| pH | 5.5 | 5.5 | 4.0 | 4.0 | 7.0 | 7.0 | 5.5 | 6.2 |
| Methyl salicylate/linalool | 0.0071 | 0.0071 | 0 | 0.0071 | 0 | 0.0071 | 0.0071 | 0.0071 |
| Sensory rating | 6.0 | 5.3 | 1.0 | 6.0 | 1.0 | 6.0 | 6.0 | 6.0 |

As evident from the tables given above, in beverages with a pH ranging from 4.0 to 7.0 and a degree of sweetness ranging from 3 to 10, methyl salicylate functioned to reduce the sensation of roughness on the tongue. Also, particularly superior effect was observed when the methyl salicylate content and the weight ratio of methyl salicylate/linalool fell within the particular ranges.

### (Test Example 4)

Different beverages were prepared by mixing water with different ingredients in different amounts as indicated in the tables given below. The pH of the beverages was adjusted with phosphoric acid and trisodium citrate. However, no phosphoric acid nor trisodium citrate were used in Trial Product 55. The prepared beverages were measured for their absorbance at a wavelength of 660 nm and their ΔE of transmitted light relative to pure water by following the same procedures as in Test Example 1. All of the prepared beverages showed an absorbance of 0.06 or less and a ΔE value of transmitted light of 3.5 or less as measured relative to pure water.

The prepared beverages were subjected to sensory testing by following the same procedure as in Test Example 1. The averages of their ratings are shown in the tables given below.

**[Table 5A]**

| | 39 | 40 | 41 | 42 | 43 | 44 | 45 | 46 | 47 |
|---|---|---|---|---|---|---|---|---|---|
| Sugar (g/100mL) | 5.1 | 5.1 | 5.1 | 5.1 | 5.1 | 5.1 | 5.1 | 5.1 | 3.0 |
| Sucrarose (mg/100mL) | - | - | - | - | - | - | - | - | - |
| 75% phosphoric acid (mg/100mL) | 0.17 | 0.17 | 0.17 | 0.17 | 0.17 | 0.17 | 0.17 | 0.17 | 0.17 |
| Trisodium citrate (mg/100mL) | 0.33 | 0.33 | 0.33 | 0.33 | 0.33 | 0.33 | 0.33 | 0.33 | 0.33 |
| Linalool (ppb) | 50 | 50 | 7000 | 7000 | 7000 | 7000 | 7000 | 14000 | 7000 |
| β-damascenone (ppb) | 0 | 1 | 2 | 25 | 75 | 100 | 150 | 4 | 25 |
| Degree of sweetness | 5 | 5 | 5 | 5 | 5 | 5 | 5 | 5 | 3 |
| pH | 5.5 | 5.5 | 5.5 | 5.5 | 5.5 | 5.5 | 5.5 | 5.5 | 5.5 |
| β-damascenone/linalool | 0 | 0.020 | 0.00029 | 0.0036 | 0.011 | 0.014 | 0.021 | 0.00029 | 0.0036 |
| Sensory rating | 2.0 | 3.3 | 3.3 | 5.7 | 5.3 | 4.3 | 2.0 | 3.0 | 5.5 |

**[Table 5B]**

| | 48 | 49 | 50 | 51 | 52 | 53 | 54 | 55 |
|---|---|---|---|---|---|---|---|---|
| Sugar (g/100mL) | 10.4 | - | 5.1 | 5.1 | 5.1 | 5.1 | 10.4 | 5.1 |
| Sucrarose (mg/100mL) | - | 8.33 | - | - | - | - | - | - |
| 75% phosphoric acid (mg/100mL) | 0.17 | 0.17 | 1.6 | 1.6 | 0.17 | 0.17 | 0.17 | 0 |
| Trisodium citrate (mg/100mL) | 0.33 | 0.33 | 0.33 | 0.33 | 13.1 | 13.1 | 0.33 | 0 |
| Linalool (ppb) | 7000 | 7000 | 7000 | 7000 | 7000 | 7000 | 7000 | 7000 |
| β-damascenone (ppb) | 25 | 25 | 0 | 25 | 0 | 25 | 25 | 25 |
| Degree of sweetness | 10 | 5 | 5 | 5 | 5 | 5 | 10 | 5 |
| pH | 5.5 | 5.5 | 4.0 | 4.0 | 7.0 | 7.0 | 5.5 | 6.2 |
| β-damascenone/linalool | 0.0036 | 0.0036 | 0 | 0.0036 | 0 | 0.0036 | 0.0036 | 0.0036 |
| Sensory rating | 5.3 | 5.7 | 1.0 | 5.7 | 1.0 | 5.7 | 5.7 | 5.7 |

As evident from the tables given above, in beverages with a pH ranging from 4.0 to 7.0 and a degree of sweetness ranging from 3 to 10, β-damascenone functioned to reduce the sensation of roughness on the tongue. Also, particularly superior effect was observed when the β-damascenone content and the weight ratio of β-damascenone/linalool fell within the particular ranges.

### (Test Example 5)

Different beverages were prepared by mixing water with different ingredients in different amounts as indicated in the tables given below. The pH of the beverages was adjusted with phosphoric acid and trisodium citrate. However, no phosphoric acid nor trisodium citrate were used in Trial Product 72. The prepared beverages were measured for their absorbance at a wavelength of 660 nm and their ΔE of transmitted light relative to pure water by following the same procedures as in Test Example 1. All of the prepared beverages showed an absorbance of 0.06 or less and a ΔE value of transmitted light of 3.5 or less as measured relative to pure water.

The prepared beverages were subjected to sensory testing by following the same procedure as in Test Example 1. The averages of their ratings are shown in the tables given below.

**[Table 6A]**

| | 56 | 57 | 58 | 59 | 60 | 61 | 62 | 63 | 64 |
|---|---|---|---|---|---|---|---|---|---|
| Sugar (g/100mL) | 5.1 | 5.1 | 5.1 | 5.1 | 5.1 | 5.1 | 5.1 | 5.1 | 3.0 |
| Sucrarose (mg/100mL) | - | - | - | - | - | - | - | - | - |
| 75% phosphoric acid (mg/100mL) | 0.17 | 0.17 | 0.17 | 0.17 | 0.17 | 0.17 | 0.17 | 0.17 | 0.17 |
| Trisodium citrate (mg/100mL) | 0.33 | 0.33 | 0.33 | 0.33 | 0.33 | 0.33 | 0.33 | 0.33 | 0.33 |
| Linalool (ppb) | 50 | 50 | 7000 | 7000 | 7000 | 7000 | 7000 | 14000 | 7000 |
| Benzaldehyde (ppb) | 0 | 5 | 5 | 50 | 150 | 300 | 400 | 5 | 50 |
| Degree of sweetness | 5 | 5 | 5 | 5 | 5 | 5 | 5 | 5 | 3 |
| pH | 5.5 | 5.5 | 5.5 | 5.5 | 5.5 | 5.5 | 5.5 | 5.5 | 5.5 |
| Benzaldehyde/linalool | 0 | 0.10 | 0.00071 | 0.0071 | 0.021 | 0.043 | 0.057 | 0.00036 | 0.0071 |
| Sensory rating | 2.0 | 3.7 | 3.3 | 5.3 | 6.0 | 5.0 | 2.0 | 3.0 | 5.5 |

**[Table 6B]**

| | 65 | 66 | 67 | 68 | 69 | 70 | 71 | 72 |
|---|---|---|---|---|---|---|---|---|
| Sugar (g/100mL) | 10.4 | - | 5.1 | 5.1 | 5.1 | 5.1 | 10.4 | 5.1 |
| Sucrarose (mg/100mL) | - | 8.33 | - | - | - | - | - | - |
| 75% phosphoric acid (mg/100mL) | 0.17 | 0.17 | 1.6 | 1.6 | 0.17 | 0.17 | 0.17 | 0 |
| Trisodium citrate (mg/100mL) | 0.33 | 0.33 | 0.33 | 0.33 | 13.1 | 13.1 | 0.33 | 0 |
| Linalool (ppb) | 7000 | 7000 | 7000 | 7000 | 7000 | 7000 | 7000 | 7000 |
| Benzaldehyde (ppb) | 50 | 50 | 0 | 50 | 0 | 50 | 50 | 50 |
| Degree of sweetness | 10 | 5 | 5 | 5 | 5 | 5 | 10 | 5 |
| pH | 5.5 | 5.5 | 4.0 | 4.0 | 7.0 | 7.0 | 5.5 | 6.2 |
| Benzaldehyde/linalool | 0.0071 | 0.0071 | 0 | 0.0071 | 0 | 0.0071 | 0.0071 | 0.0071 |
| Sensory rating | 5.3 | 5.3 | 1.0 | 5.3 | 1.0 | 5.3 | 5.3 | 5.3 |

As evident from the tables given above, in beverages with a pH ranging from 4.0 to 7.0 and a degree of sweetness ranging from 3 to 10, benzaldehyde functioned to reduce the sensation of roughness on the tongue. Also, particularly superior effect was observed when the benzaldehyde content and the weight ratio of benzaldehyde/linalool fell within the particular ranges.

### (Test Example 6)

Different beverages were prepared by mixing water with different ingredients in different amounts as indicated in the tables given below. The pH of the beverages was adjusted with phosphoric acid and trisodium citrate. However, no phosphoric acid nor trisodium citrate were used in Trial Product 89. The prepared beverages were measured for their absorbance at a wavelength of 660 nm and their ΔE of transmitted light relative to pure water by following the same procedures as in Test Example 1. All of the prepared beverages showed an absorbance of 0.06 or less and a ΔE value of transmitted light of 3.5 or less as measured relative to pure water.

The prepared beverages were subjected to sensory testing by following the same procedure as in Test Example 1. The averages of their ratings are shown in the tables given below.

**[Table 7A]**

| | 73 | 74 | 75 | 76 | 77 | 78 | 79 | 80 | 81 |
|---|---|---|---|---|---|---|---|---|---|
| Sugar (g/100mL) | 5.1 | 5.1 | 5.1 | 5.1 | 5.1 | 5.1 | 5.1 | 5.1 | 3.0 |
| Sucrarose (mg/100mL) | - | - | - | - | - | - | - | - | - |
| 75% phosphoric acid (m/100mL) | 0.17 | 0.17 | 0.17 | 0.17 | 0.17 | 0.17 | 0.17 | 0.17 | 0.17 |
| Trisodium citrate (mg/100mL) | 0.33 | 0.33 | 0.33 | 0.33 | 0.33 | 0.33 | 0.33 | 0.33 | 0.33 |
| Linalool (ppb) | 50 | 50 | 7000 | 7000 | 7000 | 7000 | 7000 | 14000 | 7000 |
| Decanoic acid (ppb) | 0 | 5 | 5 | 100 | 1000 | 5000 | 6000 | 5 | 100 |
| Degree of sweetness | 5 | 5 | 5 | 5 | 5 | 5 | 5 | 5 | 3 |
| pH | 5.5 | 5.5 | 5.5 | 5.5 | 5.5 | 5.5 | 5.5 | 5.5 | 5.5 |
| Decanoic acid/linalool | 0 | 0.10 | 0.00071 | 0.0143 | 0.143 | 0.71 | 0.86 | 0.00036 | 0.0143 |
| Sensory rating | 2.0 | 3.7 | 4.0 | 5.3 | 6.0 | 3.3 | 2.0 | 3.0 | 5.3 |

**[Table 7B]**

| | 82 | 83 | 84 | 85 | 86 | 87 | 88 | 89 |
|---|---|---|---|---|---|---|---|---|
| Sugar (g/100mL) | 10.4 | - | 5.1 | 5.1 | 5.1 | 5.1 | 10.4 | 5.1 |
| Sucrarose (mg/100mL) | - | 8.33 | - | - | - | - | - | - |
| 75% phosphoric acid (mg/100mL) | 0.17 | 0.17 | 1.6 | 1.6 | 0.17 | 0.17 | 0.17 | 0 |
| Trisodium citrate (mg/100mL) | 0.33 | 0.33 | 0.33 | 0.33 | 13.1 | 13.1 | 0.33 | 0 |
| Linalool (ppb) | 7000 | 7000 | 7000 | 7000 | 7000 | 7000 | 7000 | 7000 |
| Decanoic acid (ppb) | 100 | 100 | 0 | 100 | 0 | 100 | 100 | 100 |
| Degree of sweetness | 10 | 5 | 5 | 5 | 5 | 5 | 10 | 5 |
| pH | 5.5 | 5.5 | 4.0 | 4.0 | 7.0 | 7.0 | 5.5 | 6.2 |
| Decanoic acid/linalool | 0.0143 | 0.0143 | 0 | 0.0143 | 0 | 0.0143 | 0.0143 | 0.0143 |
| Sensory rating | 5.3 | 5.3 | 1.0 | 5.3 | 1.0 | 5.3 | 5.3 | 5.3 |

As evident from the tables given above, in beverages with a pH ranging from 4.0 to 7.0 and a degree of sweetness ranging from 3 to 10, decanoic acid functioned to reduce the sensation of roughness on the tongue. Also, particularly superior effect was observed when the decanoic acid content and the weight ratio of decanoic acid/linalool fell within the particular ranges.

### (Test Example 7)

Different beverages were prepared by mixing water with different ingredients in different amounts as indicated in the tables given below. The pH of the beverages was adjusted with phosphoric acid and trisodium citrate. However, no phosphoric acid nor trisodium citrate were used in Trial Product 106. The prepared beverages were measured for their absorbance at a wavelength of 660 nm and their ΔE of transmitted light relative to pure water by following the same procedures as in Test Example 1. All of the prepared beverages showed an absorbance of 0.06 or less and a ΔE value of transmitted light of 3.5 or less as measured relative to pure water.

The prepared beverages were subjected to sensory testing by following the same procedure as in Test Example 1. The averages of their ratings are shown in the tables given below.

**[Table 8A]**

| | 90 | 91 | 92 | 93 | 94 | 95 | 96 | 97 | 98 |
|---|---|---|---|---|---|---|---|---|---|
| Sugar (g/100mL) | 5.1 | 5.1 | 5.1 | 5.1 | 5.1 | 5.1 | 5.1 | 5.1 | 3.0 |
| Sucrarose (mg/100mL) | - | - | - | - | - | - | - | - | - |
| 75% phosphoric acid (mg/100mL) | 0.17 | 0.17 | 0.17 | 0.17 | 0.17 | 0.17 | 0.17 | 0.17 | 0.17 |
| Trisodium citrate (mg/100mL) | 0.33 | 0.33 | 0.33 | 0.33 | 0.33 | 0.33 | 0.33 | 0.33 | 0.33 |
| Linalool (ppb) | 50 | 50 | 7000 | 7000 | 7000 | 7000 | 7000 | 14000 | 7000 |
| Lauric acid (ppb) | 0 | 5 | 5 | 100 | 1000 | 5000 | 6000 | 5 | 100 |
| Degree of sweetness | 5 | 5 | 5 | 5 | 5 | 5 | 5 | 5 | 3 |
| pH | 5.5 | 5.5 | 5.5 | 5.5 | 5.5 | 5.5 | 5.5 | 5.5 | 5.5 |
| Lauric acid/linalool | 0 | 0.10 | 0.00071 | 0.0143 | 0.143 | 0.71 | 0.86 | 0.00036 | 0.0143 |
| Sensory rating | 2.0 | 3.3 | 4.7 | 5.3 | 5.7 | 3.7 | 2.0 | 3.0 | 5.3 |

**[Table 8B]**

| | 99 | 100 | 101 | 102 | 103 | 104 | 105 | 106 |
|---|---|---|---|---|---|---|---|---|
| Sugar (g/100mL) | 10.4 | - | 5.1 | 5.1 | 5.1 | 5.1 | 10.4 | 5.1 |
| Sucrarose (mg/100mL) | - | 8.33 | - | - | - | - | - | - |
| 75% phosphoric acid (mg/100mL) | 0.17 | 0.17 | 1.6 | 1.6 | 0.17 | 0.17 | 0.17 | 0 |
| Trisodium citrate (mg/100mL) | 0.33 | 0.33 | 0.33 | 0.33 | 13.1 | 13.1 | 0.33 | 0 |
| Linalool (ppb) | 7000 | 7000 | 7000 | 7000 | 7000 | 7000 | 7000 | 7000 |
| Lauric acid (ppb) | 100 | 100 | 0 | 100 | 0 | 100 | 100 | 100 |
| Degree of sweetness | 10 | 5 | 5 | 5 | 5 | 5 | 10 | 5 |
| pH | 5.5 | 5.5 | 4.0 | 4.0 | 7.0 | 7.0 | 5.5 | 6.2 |
| Lauric acid/linalool | 0.0143 | 0.0143 | 0 | 0.0143 | 0 | 0.0143 | 0.0143 | 0.0143 |
| Sensory rating | 5.3 | 5.3 | 1.0 | 5.3 | 1.0 | 5.3 | 5.3 | 5.3 |

As evident from the tables given above, in beverages with a pH ranging from 4.0 to 7.0 and a degree of sweetness ranging from 3 to 10, lauric acid functioned to reduce the sensation of roughness on the tongue. Also, particularly superior effect was observed when the lauric acid content and the weight ratio of lauric acid/linalool fell within the particular ranges.

### (Test Example 8)

Different beverages were prepared by mixing water with different ingredients in different amounts as indicated in the tables given below. The pH of the beverages was adjusted with phosphoric acid and trisodium citrate. However, no phosphoric acid nor trisodium citrate were used in Trial Product 123. The prepared beverages were measured for their absorbance at a wavelength of 660 nm and their ΔE of transmitted light relative to pure water by following the same procedures as in Test Example 1. All of the prepared beverages showed an absorbance of 0.06 or less and a ΔE value of transmitted light of 3.5 or less as measured relative to pure water.

The prepared beverages were subjected to sensory testing by following the same procedure as in Test Example 1. The averages of their ratings are shown in the tables given below.

**[Table 9A]**

| | 107 | 108 | 109 | 110 | 111 | 112 | 113 | 114 | 115 |
|---|---|---|---|---|---|---|---|---|---|
| Sugar (g/100mL) | 5.1 | 5.1 | 5.1 | 5.1 | 5.1 | 5.1 | 5.1 | 5.1 | 3.0 |
| Sucrarose (mg/100mL) | - | - | - | - | - | - | - | - | - |
| 75% phosphoric acid (mg/100mL) | 0.17 | 0.17 | 0.17 | 0.17 | 0.17 | 0.17 | 0.17 | 0.17 | 0.17 |
| Trisodium citrate (mg/100mL) | 0.33 | 0.33 | 0.33 | 0.33 | 0.33 | 0.33 | 0.33 | 0.33 | 0.33 |
| Linalool (ppb) | 50 | 50 | 7000 | 7000 | 7000 | 7000 | 7000 | 14000 | 7000 |
| Butyric acid (ppb) | 0 | 5 | 5 | 100 | 1000 | 5000 | 6000 | 5 | 100 |
| Degree of sweetness | 5 | 5 | 5 | 5 | 5 | 5 | 5 | 5 | 3 |
| pH | 5.5 | 5.5 | 5.5 | 5.5 | 5.5 | 5.5 | 5.5 | 5.5 | 5.5 |
| Butyric acid/linalool | 0 | 0.10 | 0.00071 | 0.0143 | 0.143 | 0.71 | 0.86 | 0.00036 | 0.0143 |
| Sensory rating | 2.0 | 4.7 | 5.7 | 6.0 | 5.7 | 3.0 | 2.0 | 3.0 | 6.0 |

**[Table 9B]**

| | 116 | 117 | 118 | 119 | 120 | 121 | 122 | 123 |
|---|---|---|---|---|---|---|---|---|
| Sugar (g/100mL) | 10.4 | - | 5.1 | 5.1 | 5.1 | 5.1 | 10.4 | 5.1 |
| Sucrarose (mg/100mL) | - | 8.33 | - | - | - | - | - | - |
| 75% phosphoric acid (mg/100mL) | 0.17 | 0.17 | 1.6 | 1.6 | 0.17 | 0.17 | 0.17 | 0 |
| Trisodium citrate (mg/100mL) | 0.33 | 0.33 | 0.33 | 0.33 | 13.1 | 13.1 | 0.33 | 0 |
| Linalool (ppb) | 7000 | 7000 | 7000 | 7000 | 7000 | 7000 | 7000 | 7000 |
| Butyric acid (ppb) | 100 | 100 | 0 | 100 | 0 | 100 | 100 | 100 |
| Degree of sweetness | 10 | 5 | 5 | 5 | 5 | 5 | 10 | 5 |
| pH | 5.5 | 5.5 | 4.0 | 4.0 | 7.0 | 7.0 | 5.5 | 6.2 |
| Butyric acid/linalool | 0.0143 | 0.0143 | 0 | 0.0143 | 0 | 0.0143 | 0.0143 | 0.0143 |
| Sensory rating | 6.0 | 6.0 | 1.0 | 6.0 | 1.0 | 6.0 | 6.0 | 6.0 |

As evident from the tables given above, in beverages with a pH ranging from 4.0 to 7.0 and a degree of sweetness ranging from 3 to 10, butyric acid functioned to reduce the sensation of roughness on the tongue. Also, particularly superior effect was observed when the butyric acid content and the weight ratio of butyric acid/linalool fell within the particular ranges.

### (Test Example 9)

Different beverages were prepared by mixing water with different ingredients in different amounts as indicated in the tables given below. The pH of the beverages was adjusted with phosphoric acid and trisodium citrate. However, no phosphoric acid nor trisodium citrate were used in Trial Product 140. The prepared beverages were measured for their absorbance at a wavelength of 660 nm and their ΔE of transmitted light relative to pure water by following the same procedures as in Test Example 1. All of the prepared beverages showed an absorbance of 0.06 or less and a ΔE value of transmitted light of 3.5 or less as measured relative to pure water.

The prepared beverages were subjected to sensory testing by following the same procedure as in Test Example 1. The averages of their ratings are shown in the tables given below.

**[Table 10A]**

| | 124 | 125 | 126 | 127 | 128 | 129 | 130 | 131 | 132 |
|---|---|---|---|---|---|---|---|---|---|
| Sugar (g/100mL) | 5.1 | 5.1 | 5.1 | 5.1 | 5.1 | 5.1 | 5.1 | 5.1 | 3.0 |
| Sucrarose (mg/100mL) | - | - | - | - | - | - | - | - | - |
| 75% phosphoric acid (mg/100mL) | 0.17 | 0.17 | 0.17 | 0.17 | 0.17 | 0.17 | 0.17 | 0.17 | 0.17 |
| Trisodium citrate (mg/100mL) | 0.33 | 0.33 | 0.33 | 0.33 | 0.33 | 0.33 | 0.33 | 0.33 | 0.33 |
| Linalool (ppb) | 50 | 50 | 7000 | 7000 | 7000 | 7000 | 7000 | 14000 | 7000 |
| Octanoic acid (ppb) | 0 | 5 | 5 | 100 | 1000 | 5000 | 6000 | 5 | 100 |
| Degree of sweetness | 5 | 5 | 5 | 5 | 5 | 5 | 5 | 5 | 3 |
| pH | 5.5 | 5.5 | 5.5 | 5.5 | 5.5 | 5.5 | 5.5 | 5.5 | 5.5 |
| Octanoic acid/linalool | 0 | 0.10 | 0.00071 | 0.0143 | 0.143 | 0.71 | 0.86 | 0.00036 | 0.0143 |
| Sensory rating | 2.0 | 4.0 | 4.7 | 5.3 | 5.7 | 4.0 | 2.0 | 3.3 | 5.3 |

**[Table 10B]**

| | 133 | 134 | 135 | 136 | 137 | 138 | 139 | 140 |
|---|---|---|---|---|---|---|---|---|
| Sugar (g/100mL) | 10.4 | - | 5.1 | 5.1 | 5.1 | 5.1 | 10.4 | 5.1 |
| Sucrarose (mg/100mL) | - | 8.33 | - | - | - | - | - | - |
| 75% phosphoric acid (mg/100mL) | 0.17 | 0.17 | 1.6 | 1.6 | 0.17 | 0.17 | 0.17 | 0 |
| Trisodium citrate (mg/100mL) | 0.33 | 0.33 | 0.33 | 0.33 | 13.1 | 13.1 | 0.33 | 0 |
| Linalool (ppb) | 7000 | 7000 | 7000 | 7000 | 7000 | 7000 | 7000 | 7000 |
| Octanoic acid (ppb) | 100 | 100 | 0 | 100 | 0 | 100 | 100 | 100 |
| Degree of sweetness | 10 | 5 | 5 | 5 | 5 | 5 | 10 | 5 |
| pH | 5.5 | 5.5 | 4.0 | 4.0 | 7.0 | 7.0 | 5.5 | 6.2 |
| Octanoic acid/linalool | 0.0143 | 0.0143 | 0 | 0.0143 | 0 | 0.0143 | 0.0143 | 0.0143 |
| Sensory rating | 5.3 | 5.3 | 1.0 | 5.3 | 1.0 | 5.3 | 5.3 | 5.3 |

As evident from the tables given above, in beverages with a pH ranging from 4.0 to 7.0 and a degree of sweetness ranging from 3 to 10, octanoic acid functioned to reduce the sensation of roughness on the tongue. Also, particularly superior effect was observed when the octanoic acid content and the weight ratio of octanoic acid/linalool fell within the particular ranges.

### (Test Example 10)

Different beverages were prepared by mixing water with different ingredients in different amounts as indicated in the tables given below. The pH of the beverages was adjusted with phosphoric acid and trisodium citrate. However, no phosphoric acid nor trisodium citrate were used in Trial Product 157. The prepared beverages were measured for their absorbance at a wavelength of 660 nm and their ΔE of transmitted light relative to pure water by following the same procedures as in Test Example 1. All of the prepared beverages showed an absorbance of 0.06 or less and a ΔE value of transmitted light of 3.5 or less as measured relative to pure water.

The prepared beverages were subjected to sensory testing by following the same procedure as in Test Example 1. The averages of their ratings are shown in the tables given below.

**[Table 11A]**

| | 141 | 142 | 143 | 144 | 145 | 146 | 147 | 148 | 149 |
|---|---|---|---|---|---|---|---|---|---|
| Sugar (g/100mL) | 5.1 | 5.1 | 5.1 | 5.1 | 5.1 | 5.1 | 5.1 | 5.1 | 3.0 |
| Sucrarose (mg/100mL) | - | - | - | - | - | - | - | - | - |
| 75% phosphoric acid (mg/100mL) | 0.17 | 0.17 | 0.17 | 0.17 | 0.17 | 0.17 | 0.17 | 0.17 | 0.17 |
| Trisodium citrate (mg/100mL) | 0.33 | 0.33 | 0.33 | 0.33 | 0.33 | 0.33 | 0.33 | 0.33 | 0.33 |
| Linalool (ppb) | 50 | 50 | 7000 | 7000 | 7000 | 7000 | 7000 | 14000 | 7000 |
| Palmitic acid (ppb) | 0 | 5 | 5 | 100 | 1000 | 5000 | 6000 | 5 | 100 |
| Degree of sweetness | 5 | 5 | 5 | 5 | 5 | 5 | 5 | 5 | 3 |
| pH | 5.5 | 5.5 | 5.5 | 5.5 | 5.5 | 5.5 | 5.5 | 5.5 | 5.5 |
| Palmitic acid/linalool | 0 | 0.10 | 0.00071 | 0.0143 | 0.143 | 0.71 | 0.86 | 0.00036 | 0.0143 |
| Sensory rating | 2.0 | 4.3 | 3.7 | 4.7 | 6.0 | 6.0 | 3.0 | 3.0 | 3.0 |

**[Table 11B]**

| | 150 | 151 | 152 | 153 | 154 | 155 | 156 | 157 |
|---|---|---|---|---|---|---|---|---|
| Sugar (g/100mL) | 10.4 | - | 5.1 | 5.1 | 5.1 | 5.1 | 10.4 | 5.1 |
| Sucrarose (mg/100mL) | - | 8.33 | - | - | - | - | - | - |
| 75% phosphoric acid (mg/100mL) | 0.17 | 0.17 | 1.6 | 1.6 | 0.17 | 0.17 | 0.17 | 0 |
| Trisodium citrate (mg/100mL) | 0.33 | 0.33 | 0.33 | 0.33 | 13.1 | 13.1 | 0.33 | 0 |
| Linalool (ppb) | 7000 | 7000 | 7000 | 7000 | 7000 | 7000 | 7000 | 7000 |
| Palmitic acid (ppb) | 100 | 100 | 0 | 100 | 0 | 100 | 100 | 100 |
| Degree of sweetness | 10 | 5 | 5 | 5 | 5 | 5 | 10 | 5 |
| pH | 5.5 | 5.5 | 4.0 | 4.0 | 7.0 | 7.0 | 5.5 | 6.2 |
| Palmitic acid/linalool | 0.0143 | 0.0143 | 0 | 0.0143 | 0 | 0.0143 | 0.0143 | 0.0143 |
| Sensory rating | 4.7 | 4.7 | 1.0 | 4.7 | 1.0 | 4.7 | 4.7 | 4.7 |

As evident from the tables given above, in beverages with a pH ranging from 4.0 to 7.0 and a degree of sweetness ranging from 3 to 10, palmitic acid functioned to reduce the sensation of roughness on the tongue. Also, particularly superior effect was observed when the palmitic acid content and the weight ratio of palmitic acid/linalool fell within the particular ranges.

## Claims

1. A beverage comprising 50 to 14000 ppb of linalool, and at least one selected from the group consisting of geraniol, methyl salicylate, β-damascenone, benzaldehyde, decanoic acid, lauric acid, butyric acid, octanoic acid, and palmitic acid, wherein the beverage satisfies the following requirements (I) to (V):
(I) an absorbance at a wavelength of 660 nm of 0.06 or less;
(II) a ΔE (color difference) value of 3.5 or less relative to pure water;
(III) a degree of sweetness of 3 to 10;
(IV) a pH of 4.0 to 7.0; and
(V) at least any one of (a) to (i) as defined below should be satisfied:
(a) a geraniol content of 5 to 2000 ppb;
(b) a methyl salicylate content of 1 to 200 ppb;
(c) a β-damascenone content of 1 to 100 ppb;
(d) a benzaldehyde content of 5 to 300 ppb;
(e) a decanoic acid content of 5 to 5000 ppb;
(f) a lauric acid content of 5 to 5000 ppb;
(g) a butyric acid content of 5 to 5000 ppb;
(h) an octanoic acid content of 5 to 5000 ppb;
(i) a palmitic acid content of 5 to 5000 ppb.

2. The beverage according to claim 1, wherein the beverage satisfies at least one of the following requirements:
(a) should be satisfied, and also a weight ratio of geraniol content to linalool content (geraniol content/linalool content) should be 0.0014 or more;
(b) should be satisfied, and also a weight ratio of methyl salicylate content to linalool content (methyl salicylate content/linalool content) should be 0.00007 or more;
(c) should be satisfied, and also a weight ratio of β-damascenone content to linalool content (β-damascenone content/linalool content) should be 0.00028 or more;
(d) should be satisfied, and also a weight ratio of benzaldehyde content to linalool content (benzaldehyde content/linalool content) should be 0.0003 or more;
(e) should be satisfied, and also a weight ratio of decanoic acid content to linalool content (decanoic acid content/linalool content) should be 0.0003 or more;
(f) should be satisfied, and also a weight ratio of lauric acid content to linalool content (lauric acid content/linalool content) should be 0.0003 or more;
(g) should be satisfied, and also a weight ratio of butyric acid content to linalool content (butyric acid content/linalool content) should be 0.0003 or more;
(h) should be satisfied, and also a weight ratio of octanoic acid content to linalool content (octanoic acid content/linalool content) should be 0.0003 or more;
(i) should be satisfied, and also a weight ratio of palmitic acid content to linalool content (palmitic acid content/linalool content) should be 0.0003 or more.

3. A method for producing a beverage comprising 50 to 14000 ppb of linalool, and satisfying the following requirements (I) to (IV):
(I) an absorbance at a wavelength of 660 nm of 0.06 or less;
(II) a ΔE (color difference) value of 3.5 or less relative to pure water;
(III) a degree of sweetness of 3 to 10; and
(IV) a pH of 4.0 to 7.0;
the method comprising the step of adjusting the content of at least one selected from the group consisting of geraniol, methyl salicylate, β-damascenone, benzaldehyde, decanoic acid, lauric acid, butyric acid, octanoic acid, and palmitic acid, so as to satisfy at least any one of (a) to (i) as defined below:
(a) a geraniol content in the beverage should be in the range of 5 to 2000 ppb;
(b) a methyl salicylate content in the beverage should be in the range of 1 to 200 ppb;
(c) a β-damascenone content in the beverage should be in the range of 1 to 100 ppb;
(d) a benzaldehyde content in the beverage should be in the range of 5 to 300 ppb;
(e) a decanoic acid content in the beverage should be in the range of 5 to 5000 ppb;
(f) a lauric acid content in the beverage should be in the range of 5 to 5000 ppb;
(g) a butyric acid content in the beverage should be in the range of 5 to 5000 ppb;
(h) an octanoic acid content in the beverage should be in the range of 5 to 5000 ppb;
(i) a palmitic acid content in the beverage should be in the range of 5 to 5000 ppb.
